(19) Europäisches Patentamt
European Patent Office
Office européen des brevets

(11) EP 0 943 633 A1

(12) **EUROPÄISCHE PATENTANMELDUNG**

(43) Veröffentlichungstag:
**22.09.1999 Patentblatt 1999/38**

(51) Int. Cl.[6]: **C08F 210/16**

(21) Anmeldenummer: **99104858.8**

(22) Anmeldetag: **11.03.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.03.1998 DE 19811934**

(71) Anmelder:
**BASF AKTIENGESELLSCHAFT**
**67056 Ludwigshafen (DE)**

(72) Erfinder:
- **Kristen, Marc, Oliver, Dr.**
  **67117 Limburgerhof (DE)**
- **Lilge, Dieter, Dr.**
  **67117 Limburgerhof (DE)**

(54) **Ethylencopolymere mit enger Comonomerverteilung**

(57) Ethylencopolymerisat, aufgebaut aus Einheiten des Ethylens und mindestens eines $C_3$- bis $C_{12}$-$\alpha$-Olefins, mit einer Molekulargewichtsverteilung $M_w/M_n > 3$, und einer Comonomerverteilung, welche durch eine Standardabweichung $\sigma$ der mittleren gewichteten Elutionstemperatur $T_a$, bestimmt nach der Methode der Temperatur-Rising-Elution-Fraction (TREF), gekennzeichnet ist, der folgender Gleichungs I gehorcht:

$$\sigma < k_4-k_1 (T_a-k_o)-k_1k_3 (T_a-k_o)/(1+k_3 (T_a-k_o)) \text{ [°C]} \qquad \text{GI}$$

wobei $k_o$ = 338,5°C, $k_1$ = 0,053, $k_2$ = 1,1318°C, $k_3$ = 0,00483°C$^{-1}$, $k_4$ = 0,55°C und $T_a$ < 98°C ist.

EP 0 943 633 A1

## Beschreibung

Gegenstand der vorliegenden Erfindung sind Ethylencopolymere, aufgebaut aus Einheiten des Ethylens und mindestens eines $C_{3}$- bis $C_{12}$-$\alpha$-Olefins, mit einer Molekulargewichtsverteilung $M_w/M_n > 3$ und einer Comonomerenverteilung, welche durch eine Standardabweichung $\sigma$ der mittleren gewichteten Elutionstemperatur $T_a$, bestimmt nach der Methode der Temperatur-Rising-Elution-Fraction (TREF), gekennzeichnet ist, die folgender Gleichung GI gehorcht:

$$\sigma < k_4 - k_1 (T_a - k_o) - k_2 k_3 (T_a - k_o) / (1 + k_3 (T_a - k_o)) \text{ [°C]} \qquad \text{GI}$$

wobei $k_o = 338{,}5°C$, $k_1 = 0{,}053$, $k_2 = 1{,}1318°C$, $k_3 = 0{,}00483°C^{-1}$ $k_4 = 0{,}55°C$, und $T_a < 98°C$ ist.

Weiterhin betrifft die Erfindung ein Verfahren zur Herstellung solcher Ethylencopolymerer, die Verwendung der Ethylencopolymeren zur Herstellung von Folien, Hohlkörpern und Fasern sowie Folien, Hohlkörper und Fasern, die unter Verwendung dieser Ethylencopolymere hergestellt werden.

Bei Copolymerisationen von Ethylen mit anderen $\alpha$-Olefinen ist es wünschenswert, einen hohen Einbau dieser Comonomeren in das Ethylencopolymer zu erhalten. Die Effizienz des Comonomereneinbaus ist bei Metallocenkatalysatoren besonders hoch und kann bei diesen Katalysatoren über die Ligandenstruktur dieser Metallkomplexe gesteuert werden.

Allgemein wird angenommen, daß der Öffnungswinkel zwischen den Cyclopentadienylringen des Metallocens einen großen Einfluß auf das Einbauverhalten besitzt. Einen großen Öffnungswinkel kann man z.B. durch Verbrückung der Ringe durch eine $SiMe_2$- oder $C_2H_4$-Brücke erreichen. Solche Metallocen-Katalysatoren sind z.B. in EP 336128 beschrieben.

Die technisch bedeutungsvollsten Polymerisationsverfahren zur Durchführung solcher Copolymerisationen sind Gasphasen- und Suspensionspolymerisationsverfahren. Zur Durchführung solcher Copolymerisationsverfahren ist es erforderlich, den Katalysator auf einen partikulären Träger wie beispielsweise Kieselgel aufzubringen.

Verfahren zur Trägerung von Metallocenkatalysatoren werden z.B. in WO 95/07939 WO 87/03889, WO 94/28034, EP 206794 und EP 250600 beschrieben. Hierbei wird jeweils MAO (Methylalumoxan) oder ein anderes Alumoxan als Cokatalysator verwendet. Auch Methoden zur Trägerung von Metallocenen, bei denen Borverbindungen als Aktivator eingesetzt werden, wurden bereits beschrieben (siehe z.B. WO 91/09882, WO 94/03506, WO 95/14044, EP 628574, WO 95/15815).

Die mit diesen geträgerten Katalysatoren hergestellten Polymere weisen meist eine sehr enge Molekulargewichtsverteilung und gleichzeitig einen sehr gleichmäßigen Comonomereinbau auf, was in einigen erwünschten Eigenschaften wie Reißfestigkeit und Glanz der aus diesen Materialien hergestellten Folien resultiert. Durch die enge Molekulargewichtsverteilung wird jedoch die Verarbeitung auf in der Polymerindustrie üblichen Maschinen sehr erschwert. Polymere mit einer breiteren Molmassenverteilung, wie man sie z.B. mit Hilfe von Chrom- oder Titan-Katalysatoren erhalten kann, lassen sich viel besser verarbeiten, haben aber den Nachteil, daß das Comonomer (z.B. Buten, Hexen, Octen) ungleichmäßig auf die Polymermoleküle verteilt ist. So ist im niedermolekularen Anteil ein deutlich höherer Anteil an Comonomeren vorhanden als im hochmolekularen Anteil. Daher weisen diese gut verarbeitbaren Polymere Schwächen in den mechanischen Eigenschaften auf.

Alle bekannten Versuche, mit Hilfe von Metallocenkatalysatoren Copolymere mit breiterer Molekulargewichtsverteilung herzustellen führten zu nachteiligen Produkten. So wird beispielsweise in EP-A-613908 die Herstellung von Copolymeren mit einer Molekulargewichtsverteilung $M_w/M_n$ von bis zu 32 beschrieben, diese Copolymere weisen jedoch auch eine breite Comonomerenverteilung auf.

In WO 93/09148 werden ebenfalls Copolymere mit verbreiterter Molekulargewichtsverteilung beschrieben, diese Verbreiterung geht jedoch ebenfalls zu Lasten einer breiteren Comonomerenverteilung sowie eines großen niedermolekularen Anteils, der sich in einem hohen Hexan-extrahierbaren Anteil von 4,1 bis 13,3 % wiederspiegelt.

In DE 19606167 werden geträgerte Katalysatorensysteme beschrieben mit deren Hilfe sich Polymere mit enger Comonomerenverteilung und enger Molekulargewichtsverteilung herstellen lassen. Diese Katalysatorsysteme enthalten Metallocenkomplexe mit verbrückten oder unverbrückten Metallocenliganden. Copolymerisationen und deren Produkte werden in diesem Dokument nicht beschrieben.

Der vorliegenden Erfindung lag nun die Aufgabe zugrunde, Ethylencopolymere aus Einheiten des Ethylens und mindestens eines $C_3$-bis $C_{12}$-$\alpha$-olefins mit einer Molekulargewichtsverteilung >3 zu finden, welche dennoch eine enge Comonomerenverteilung aufweisen.

Demgemäß wurden die eingangs beschriebenen Ethylencopolymere gefunden. Weiterhin wurde ein Verfahren zur Herstellung solcher Copolymere, die Verwendung dieser Copolymere zur Herstellung von Folien, Hohlkörpern und Fasern sowie Folien, Hohlkörper und Fasern, die unter Verwendung dieser Copolymere hergestellt wurden, gefunden.

Die enge Comonomerenverteilung der erfindungsgemäßen Copolymeren läßt sich in vorteilhafter Weise über die Standardabweichung der mittleren gewichteten Elutionstemperatur $T_a$, wie sie nach der TREF-Methode ermittelt werden kann, beschreiben. Die Methode der TREF ist z.B. in Wild, Advances in Polymer Science, 98, p. 1-47, 1990,

Springer-Verlag und Wild, Blatz, Polymer Mater. Sci. Eng. 67 p. 153, 1992 beschrieben. Die mittlere gewichtete Elutionstemperatur ($T_a$) und die Standardabweichung ($\sigma$) werden wie folgt (s.a. Bevington, Mc Graw-Hill, Data Reduction and Error Analysis for the Physical Sciences, 1969) verwendet.

$$T_a = \Sigma (c(T_i)^* T_i) / \Sigma c(T_i) \, [°C]$$

$$\sigma = ([\Sigma(T_i - T_a)^2 * c(Ti)] / \Sigma c(Ti))^{1/2} [°C]$$

Dabei bedeuten $T_i$ die Temperatur an der Stelle i und $c(T_i)$ die Polymerkonzentration bei der Temperatur $T_i$

Die erfindungsgemäßen Copolymere weisen nun eine ungewöhnlich geringe Standardabweichung $\sigma$ auf, die sich durch Gleichung GI mit den oben genannten Werten für $k_o$, $k_1$, $k_3$, und $k_4$ beschreiben läßt.

Besonders bevorzugt sind Copolymere, bei denen die Standardabweichung $\sigma$ so klein ist, daß sie Gleichung I gehorcht, wobei $k_o$ = 496,6 °C, $k_1$ = 0,0467, $k_2$ = 1,1318 °C, $k_3$ = 0,00483 $°C^{-1}$, $k_4$ = 0,55 °C und $T_a$ < 98 °C ist.

Die vorteilhaften Eigenschaften der erfindungsgemäßen Copolymeren beruhen im wesentlichen auf der Kombination dieser engen Comonomerenverteilung mit einer relativ breiten Molekulargewichtsverteilung. Diese Molekulargewichtsverteilung $M_w/M_n$ muß einen Wert > 3 annehmen, vorzugsweise einen Wert > 3 und < 8 und besonders bevorzugt einen Wert zwischen 3,5 und 7,0.

Die erfindungsgemäßen Copolymere enthalten neben Einheiten des Ethylens auch solche von mindestens einem $C_3$- bis $C_{12}$-$\alpha$-Olefin. Als $\alpha$-Olefine kommen Propen, Buten, Penten, Hexen, Hepten, Octen, Nonen, Decen, Undecen und Dodecen in Betracht. Bevorzugt sind Comonomereinheiten, die sich von Buten und Hexen ableiten.

Der Anteil der Comonomeren am Copolymeren richtet sich nach der gewünschten Dichte des Copolymers. Üblicherweise enthalten die erfindungsgemäßen Copolymere einen Comonomeranteil, der in einer Dichte von 0,87 bis 0,96 $g/cm^3$, vorzugsweise von 0,90 bis 0,94 $g/cm^3$, besonders bevorzugt von 0,910 bis 0,935 $g/cm^3$ resultiert.

Die erfindungsgemäßen Copolymere können sehr unterschiedliche Molekulargewichte aufweisen, wobei die Einstellung des gewünschten Molekulargewichts mit Methoden beeinflußt werden kann, die dem Fachmann geläufig sind, also beispielsweise durch die Polymerisationstemperatur oder durch Reagenzien wie Wasserstoff. Üblicherweise zeigen die Copolymere ein Molekulargewicht $M_w$ > 100 000, vorzugsweise > 150 000.

Bevorzugt sind weiterhin Copolymere, die einen geringen Anteil von niedermolekularen Polymerketten enthalten. Dieser Anteil, der auch durch den Anteil der mit Heptan extrahierbaren Anteile charakterisiert werden kann, hat einen negativen Einfluß z.B. auf die Organoleptik der Copolymere. Der Heptan extrahierbare Anteil der erfindungsgemäßen Copolymere beträgt vorzugsweise weniger als 4 Gew.-%, besonders bevorzugt weniger als 1 Gew.-% und insbesondere weniger als 0,1 Gew.-%, bezogen auf die Gesamtmasse des Copolymeren.

Copolymere, die das erfindungsgemäße Eigenschaftsprofil aufweisen, können auf verschiedene Weise hergestellt werden. Als vorteilhaft hat sich z.B. ein Verfahren erwiesen, welches dadurch gekennzeichnet ist, daß man zur Copolymerisation ein geträgertes Katalysatorsystem einsetzt, welches erhältlich ist durch

A) Umsetzung eines anorganischen Trägermaterials mit einer Metallverbindung der allgemeinen Formel I

$$M^1(R^1)_r(R^2)_s(R^3)_t(R^4)_u \text{ I} \qquad \text{I}$$

in der

| | |
|---|---|
| $M^1$ | ein Alkali-, ein Erdalkalimetall oder ein Metall der III. oder IV. Hauptgruppe des Periodensystems bedeutet, |
| $R^1$ | Wasserstoff, $C_1$- bis $C_{10}$-Alkyl, $C_6$- bis $C_{15}$-Aryl, Alkylaryl oder Arylalkyl mit jeweils 1 bis 10 C-Atomen im Alkylrest und 6 bis 20 C-Atomen im Arylrest, |
| $R^2$ | bis $R^4$ Wasserstoff, Halogen, $C_1$- bis $C_{10}$-Alkyl, $C_6$- bis $C_{15}$-Aryl, Alkylaryl, Arylalkyl, Alkoxy oder Dialkylamino mit jeweils 1 bis 10 C-Atomen im Alkylrest und 6 bis 20 C-Atomen im Arylrest, |
| r | eine ganze Zahl von 1 bis 4 und |
| s, t und u | ganze Zahlen von 0 bis 3 bedeuten, wobei die Summe r+s+t+u der Wertigkeit von $M^1$ entspricht, |

B) Umsetzung des nach A) erhaltenen Materials mit einem verbrückten Metallocenkomplex in seiner Metalldihalogenid-Form und einer metalloceniumionenbildenden Verbindung

und

C) anschließende Umsetzung mit einer Metallverbindung der allgemeinen Formel II

$$M^2(R^5)_o(R^6)_p(R^7)_q \qquad \text{II}$$

in der

| | |
|---|---|
| $M^2$ | ein Alkali-, ein Erdalkalimetall, Zink oder ein Metall der III. Hauptgruppe des Periodensystems bedeutet, |
| $R^5$ | Wasserstoff, $C_1$- bis $C_{10}$-Alkyl, $C_6$- bis $C_{15}$-Aryl, Alkylaryl oder Arylalkyl mit jeweils 1 bis 10 C-Atomen im Alkylrest und 6 bis 20 C-Atomen im Arylrest, |
| $R^6$ und $R^7$ | Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest, |
| o | eine ganze Zahl von 1 bis 3 und |
| p und q | ganze Zahlen von 0 bis 2 bedeuten, wobei die Summe o+p+q der Wertigkeit von $M^2$ entspricht. |

Als Trägermaterialien werden vorzugsweise feinteilige Feststoffe eingesetzt, deren Teilchendurchmesser im Bereich von 1 bis 200 µm liegen, insbesondere 30 bis 70 µm.

Geeignete Trägermaterialien sind beispielsweise Kieselgele, bevorzugt solche der Formel $SiO_2 \cdot a\ Al_2O_3$, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace oder ES 70x der Fa. Crosfield.

Diese Trägermaterialien können zur Entfernung des adsorbierten Wassers einer thermischen Behandlung unterzogen werden oder auch calciniert werden, wobei bevorzugt eine Behandlung bei 80 - 200°C vorzugsweise bei 100 - 150°C, durchgeführt wird.

Andere anorganische Verbindungen wie $Al_2O_3$ oder $MgCl_2$ oder diese Verbindungen enthaltende Mischungen können ebenfalls als Trägermaterialien eingesetzt werden.

Von den Metallverbindungen der allgemeinen Formel I sind diejenigen bevorzugt, bei denen $M^1$ für ein Metall der III. Hauptgruppe des Periodensystems steht, insbesondere für Aluminium, $R^1$ für $C_1$- bis $C_{10}$-Alkyl und $R^2$ bis $R^4$ für $C_1$- bis $C_{10}$-Alkyl. Für den besonders bevorzugten Fall, daß $M^1$ für Aluminium steht, ist u Null und die Reste $R^1$ bis $R^3$ weisen insbesondere die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs- bzw. Suspensionsmittel sind insbesondere Kohlenwasserstoffe wie Heptan geeignet. Die Menge an Metallverbindung I kann in weiten Grenzen variieren, die Mindestmenge richtet sich nach der Anzahl der Hydroxygruppen des Trägers. Die Temperaturen, Reaktionszeiten und Drücke sind an sich unkritisch, bevorzugt sind Temperaturen von 0 bis 80°C und Reaktionszeiten von 0,1 bis 48 Stunden.

Es hat sich als vorteilhaft erwiesen, nach der Trägervorbehandlung die überschüssige Metallverbindung I durch Auswaschen, beispielsweise mit Kohlenwasserstoffen wie Pentan oder Hexan, zu entfernen und den Träger zu trocknen.

Das so hergestellte Material ist mindestens 6 Monaten lagerbar und nicht pyrophor.

Dieses Material wird nun in einer weiteren Stufe B) mit einem Metallocenkomplex in seiner Metalldihalogenid-Form und einer metalloceniumionenbildenden Verbindung umgesetzt.

Alternativ ist es möglich, die Trägervorbehandlung und die anschließende Beladung in einem Schritt durchzuführen. Dabei wird der vorbehandelte Träger nicht isoliert, sondern die erhaltene Supension wird direkt mit einem Metallocendihalogenid und einer metalloceniumionenbildenden Verbindung umgesetzt.

Als Metallocenkomplexe eignen sich beispielsweise folgende Verbindungen der allgemeinen Formel III:

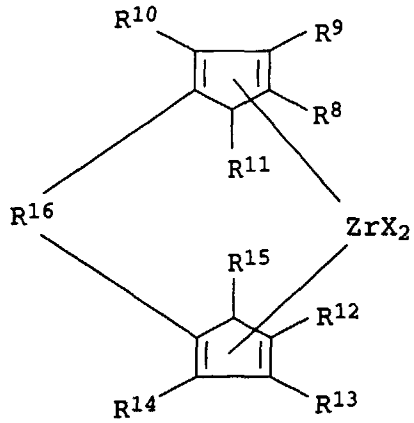

III

wobei X für Chlor, $R^8$ bis $R^{15}$ für Wasserstoff oder $C_1$- bis $C_4$-Alkyl, oder 2 benachbarte Reste $R^8$ bis $R^{15}$ gemeinsam für 4 bis 12 C-Atome aufweisende cyclische Gruppen und

R16 für

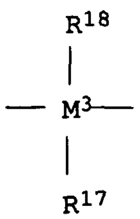 , 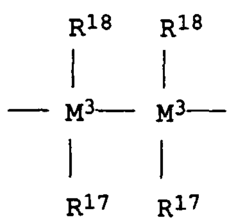 , 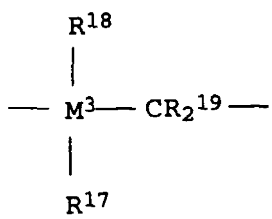 ,

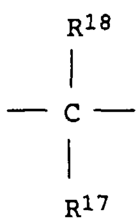 , 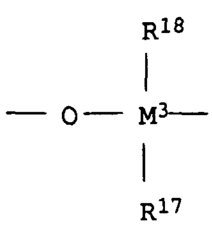 , 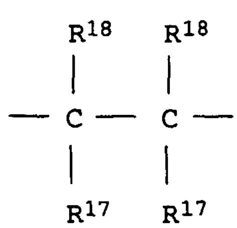 ,

= $BR^{18}$, = $AlR^{18}$, -Ge-, -Sn-, -O-, -S-, = SO, = $SO_2$, = $NR^{18}$, = CO, = $PR^{18}$ oder = $P(O)R^{18}$ ist,

wobei $R^{17}$, $R^{18}$ und $R^{19}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^3$ Silicium, Germanium oder Zinn ist.

Von den Metallocenkomplexen der allgemeinen Formel III sind solche bevorzugt, in denen die verbrückten Cyclopentadienylliganden sich vom Indenyl-, Tetahydroindenyl- oder Benzindenylringsystem ableiten. Weiterhin sind solche Verbindungen III bevorzugt, bei denen die substituierten oder unsubstituierten Cyclopentadienylliganden mit Ethylengruppen, substitiuerten Ethylengruppen oder mit Dimethylsilylgruppen verbrückt sind.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid,

Ethylenbis(tetrahydroindenyl)-zirkoniumdichlorid, Tetramethylethylen-9-fluorenylcyclopentadienylzirkoniumdichlorid, Dimethylsilandiylbis(3-tert.butyl-5-methylcyclopentadienyl)-zirkoniumdichlorid, Dimethylsilandiylbis(3-tert.butyl-5-ethylcyclopentadienyl)-zirkoniumdichlorid, Dimethylsilandiylbis(2-methylindenyl)-zirkoniumdichlorid, Dimethylsilandiylbis(2-isopropylindenyl)-zirkoniumdichlorid, Dimethylsilandiylbis(2-tert.butylindenyl)-zirkoniumdichlorid, Diethylsilandiylbis(2-methylindenyl)-zirkoniumdibromid, Dimethylsilandiylbis(3-methyl-5-methylcyclopentadienyl)-zirkoniumdichlorid, Dimethylsilandiylbis(3-ethyl-5-isopropylcyclopentadienyl)-zirkoniumdichlorid, Dimethylsilandiylbis(2-methylindenyl)-zirkoniumdichlorid, Dimethylsilandiylbis(2-methylbenzindenyl)-zirkoniumdichlorid und Dimethylsilandiylbis(2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden des Zirkoniums bevorzugt ist.

Beispiele für entsprechende Herstellungsverfahren sind u.a. im Journal of Organometallic Chemistry, 369 (1989), 359-370, beschrieben.

Es können auch Mischungen verschiedener Metallocenkomplexe eingesetzt werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

$$M^4X^1X^2X^3 \qquad \text{IV}$$

bevorzugt, in der

- $M^4$ ein Element der III. Hauptgruppe des Periodensystems bedeutet, insbesondere B, Al oder Ga, vorzugsweise B,
- $X^1$, $X^2$ und $X^3$ für Wasserstoff, $C_1$- bis $C_{10}$-Alkyl, $C_6$- bis $C_{15}$-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel V

$$[(Y^{a+})Q_1Q_2...Q_z]^{d+} \qquad \text{V}$$

geeignet, in denen

- Y ein Element der I. bis VI. Hauptgruppe oder der I. bis VIII. Nebengruppe des Periodensystems bedeutet,
- $Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_1$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen
- a für ganze Zahlen von 1 bis 6 steht
- z für ganze Zahlen von 0 bis 5
- d der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierenden Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex III.

Die Bedingungen für die Umsetzung des Metallocenkomplexes mit der metalloceniumionenbildenden Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A) hergestellte Material gegeben. Eine Menge von 0,1 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 100°C und Reaktionszeiten im Bereich von 0,1 bis 20 Stunden haben sich als besonders geeignet erwiesen.

Das nach B) erhaltene Material kann nun isoliert werden und ist bis zumindestens 6 Monaten lagerbar.

In einer weiteren Stufe C), der Aktivierungsstufe, wird das nach B) erhaltenen Material mit einer Metallverbindung der allgemeinen Formel II umgesetzt. Diese Aktivierung kann zu einem beliebigen Zeitpunkt, d. h. vor, bei oder nach der Dosierung des nach B) erhaltenen Materials in den Reaktor, erfolgen. Vorzugsweise erfolgt die Aktivierung nach der Dosierung des nach B) erhaltenen materials in den Reaktor.

Von den Metallverbindungen der allgemeinen Formel II sind diejenigen Verbindungen bevorzugt, in denen

$M^2$ Lithium, Magnesium oder Aluminium bedeutet und
$R^5$ bis $R^7$ für $C_1$- bis $C_{10}$-Alkyl stehen.

Die Bedingungen für die Umsetzung in Stufe C) sind an sich unkritisch. Temperaturen, Reaktionszeiten und Drücke richten sich nach dem Zeitpunkt der Umsetzung, d.h. Aktivierung.

Das erfindungsgemäße Copolymerisationsverfahren kann in Suspension oder in der Gasphase durchgeführt werden, wobei die Gasphasenpolymerisation bevorzugt ist.

Die erfindungsgemäßen Copolymerisate eignen sich aufgrund ihrer mechanischen Eigenschaften und ihrer Verarbeitbarkeit hervorragend zur Herstellung von Folien. So lassen sich diese Copolymere meist auf üblichen Geräten, beispielsweise auf solchen, wie sie für durch Ziegler- oder Phillipskatalyse oder für durch radikalische Hochdruckpolymerisation hergestellte Polymere verwendet werden, zu Folien und auch zu Hohlkörpern und Fasern verarbeiten. Die Folien weisen ausgezeichnete Festigkeit und sehr gute optische Eigenschaften auf.

Beispiele

Die TREF Untersuchungen wurden unter folgenden Versuchsbedingungen durchgeführt: Lösungsmittel: 1,2,4-Trichlorbenzol, Fluß: 1 ml/min, Heizgeschwindigkeit: 1°C/min, Polymermenge: 5-10 mg, Träger Kieselgur.

Die Molekulargewichte der Copolymeren wurden durch GPC-Untersuchungen unter folgenden Bedingungen in Anlehnung an DIN 55672 bestimmt: Lösungsmittel: 1,2,4- Trichlorbenzol, Fluß: 1 ml/min, Temperatur: 140 °C, Kalibrierung mit PE Standards.

Herstellung der geträgerten Metallocenkatalysatoren

In einem 250 ml Kolben mit Magnetrührer wurden 100 ml abs. Toluol vorgelegt. Dazu wurden 400 mg (0,5 mmol) N,N-Dimethylaniliniumtetrakis(pentafluorphenyl)borat, 0,5 mmol des Metallocendichlorids und 10 g mit Triisobutylaluminium desaktiviertes Kieselgel (ES 70X, Fa. Crosfiel) gegeben. Die erhaltene Mischung wurde für 1 h auf 80 °C erwärmt. Anschließend wurde das Lösungsmittel im Vakuum entfernt. Ausbeute: 11g geträgerter Katalysator.

Verwendete Metallocene

1: Dimethylsilyl-bis(indenyl)zirkonium dichlorid
2: Dimethylsilyl-bis(tetrahydroindenyl)zirkonium dichlorid
3: 1,2-Ethylen-bis(tetrahydroindenyl)zirkonium dichlorid
4: 1,2-Ethylen-bis(indenyl)zirkonium dichlorid Ethylen/Buten-Copolymerisationen

In einem gerührten 10-l Stahlautoklaven wurden nach sorgfältigem Spülen mit Stickstoff und Temperieren auf die Polymerisationstemperatur von 70°C 4,5 l iso-Butan, 400 ml 1-Buten und 300 mg Butyloctyl-magnesium (als 0,3 molare Lösung in Heptan) vorgelegt. Dann wurde der geträgerte Katalysator mit weiteren 0,5 l iso-Butan eingespült und Ethylen auf einen Gesamtdruck von 38 bar aufgepreßt. Der Druck im Autoklaven wurde durch Nachdosierung von Ethylen konstant gehalten. nach 90 min wurde die Polymerisation durch Entspannen des Autoklaven abgebrochen. Das Polymerisat fiel in Form eines gut rieselfähigen Grießes an.

Die Polymerisationsdaten sowie die Eigenschaften der erhaltenen Copolymerisate sind Tabelle 1 zu entnehmen.

Tabelle 1

| Ethylen/Buten-Copolymerisationen | | | | | | | | |
|---|---|---|---|---|---|---|---|---|
| Beispiel | Katalysator | geträgerter Katalysator (mg) | Produktivität (g/g) | Dichte ($g/cm^3$) | Buten (Gew. %) | Molmasse ($M_w$ X $10^3$) | $M_w$/ $M_n$ | Kalt-Heptanextrakt (Gew. %) |
| 1 | K1 | 85 | 32000 | 0,9136 | 6.9 | 265 | 6.3 | 0.03 |
| 2 | K2 | 243 | 6800 | 0.9132 | 4.5 | 529 | 3.8 | 0.02 |
| 3 | K3 | 97 | 31000 | 0.9145 | 4.0 | 605 | 3.6 | 0.01 |
| 4 | K4 | 115 | 7600 | 0.9217 | 4.9 | 201 | 4.8 | 0.01 |

Ethylen/Hexen-Copolymerisationen

In einem gerührten 10-l-Stahlautoklaven wurden nach sorgfältigem Spülen mit Stickstoff und Temperieren auf die Polymerisationstermperatur von 70°C 4,5 l iso-Butan, 400 ml 1-Hexen und 300 mg Butyloctyl-magnesium (als 0,3 molare Lösung in Heptan) vorgelegt. Dann wurde der geträgerte Katlysator mit weiteren 0,5 l iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannung des Autoklaven abgebrochen. Das Polymerisat fiel in Form eines gut rieselfähigen Grießes an.

Die genauen Polymerisationsdaten sowie die Eigenschaften der erhaltenen Copolymerisate sind Tabelle 2 zu entnehmen.

Tabelle 2

| Ethylen/Hexen-Copolymerisationen | | | | | | | | |
|---|---|---|---|---|---|---|---|---|
| Beispiel | Katalysator | geträgerter Katalysator (mg) | Produktivität (g/g) | Dichte ($g/cm^3$) | Hexen (Gew. %) | Molmasse ($M_w$ X $10^3$) | $M_w$/$M_n$ | Kalt-Heptanextrakt (%)) |
| 5 | K1 | 130 | 17700 | 0.9174 | 5.8 | 178 | 5.8 | 0.04 |
| 6 | K2 | 135 | 4300 | 0.9157 | 3.6 | 404 | 5.4 | 0.01 |
| 7 | K3 | 118 | 24000 | 0.9160 | 2.7 | 479 | 4.5 | 0.01 |
| 8 | K4 | 135 | 6300 | 0.9278 | 3.1 | 183 | 5.1 | 0.01 |

Von den Polymerproben der Bespiele 7 und 8 wurden TREF-Analysen angefertigt. Folgende Meßwerte wurden erhalten: Beispiel 7:$\sigma$= 4,12°C, $T_a$ = 90,78°C, Beispiel 8:$\sigma$ 3,92°C, $T_a$= 89,01°C.

## Patentansprüche

1. Ethylencopolymere, aufgebaut aus Einheiten des Ethylens und mindestens eines $C_3$- bis $C_{12}$-$\alpha$-Olefins, mit einer Molekulargewichtsverteilung $M_w/M_n > 3$ und einer Comonomerenverteilung, welche durch eine Standardabweichung $\sigma$ der mittleren gewichteten Elutionstemperatur $T_a$, bestimmt nach der Methode der Temperatur-Rising-Elution-Fraction (TREF), gekennzeichnet ist, die folgender Gleichung Gl gehorcht:

$$\sigma < k_4 -k1 (T_a-k_o) - k_2 k_3 (T_a-k_o) / (1 + k_3 (T_a-k_o) [°C] \qquad Gl$$

wobei $k_o$ = 338,5°C, $k_1$ = 0,053, $k_2$ = 1,1318°C, $k_3$ = 0,00483°$C^{-1}$ $k_4$ = 0,55°C, und $T_a$ < 98°C ist.

2. Ethylencopolymere nach Anspruch 1 mit einer Comonomerenverteilung, welche durch eine Standardabweichung $\sigma$ der mittleren gewichteten Elutionstemperatur $T_a$ gekennzeichnet ist, die Gleichung Gl gehorcht, wobei $k_o$ = 496,6°C, $k_1$ = 0,0467, $k_2$ = 1,1318°C, $k_3$ = 0,00483°$C^{-1}$, $k_4$ = 0,55°C, und $T_a$ < 98°C ist.

**3.** Ethylencopolymere nach Anspruch 1 oder 2, dadurch gekennzeichnet, daß die Copolymere eine Molekulargewichtsverteilung $M_w/M_n > 3$ und $< 8$ aufweisen.

**4.** Ethylencopolymere nach den Ansprüchen 1 bis 3, dadurch gekennzeichnet, daß die Copolymere eine Molekulargewichtsverteilung $M_w/M_n$ zwischen 3,5 und 7,0 aufweisen.

**5.** Ethylencopolymere nach den Ansprüchen 1 bis 4, dadurch gekennzeichnet, daß sie ein Molekulargewicht $M_w >$ 150 000 aufweisen.

**6.** Ethylencopolymere nach den Ansprüchen 1 bis 5, dadurch gekennzeichnet, daß sie als $C_3$ - bis $C_{12}$-$\alpha$-Olefineinheiten solche des Butens enthalten.

**7.** Ethylencopolymere nach den Ansprüchen 1 bis 5 , dadurch gekennzeichnet, daß sie als $C_3$-bis $C_{12}$-$\alpha$-Olefineinheiten solche des Hexens enthalten.

**8.** Verfahren zur Herstellung von Ethylencopolymeren gemäß den Ansprüchen 1 bis 7, dadurch gekennzeichnet, daß man zur Copolymerisation ein geträgertes Katalysatorsystem einsetzt, welches erhältlich ist durch

A) Umsetzung eines anorganischen Trägermaterials mit einer Metallverbindung der allgemeinen Formel I

$$M^1(R^1)_r(R^2)_s(R^3)_t(R^4)_u \qquad \text{I}$$

in der

| | |
|---|---|
| $M^1$ | ein Alkali-, ein Erdalkalimetall oder ein Metall der III. oder IV. Hauptgruppe des Periodensystems bedeutet, |
| $R^1$ | Wasserstoff, $C_1$- bis $C_{10}$-Alkyl, $C_6$- bis $C_{15}$-Aryl, Alkylaryl oder Arylalkyl mit jeweils 1 bis 10 C-Atomen im Alkylrest und 6 bis 20 C-Atomen im Arylrest, |
| $R^2$ bis $R^4$ | Wasserstoff, Halogen, $C_1$- bis $C_{10}$-Alkyl, $C_6$- bis $C_{15}$-Aryl, Alkylaryl, Arylalkyl, Alkoxy oder Dialkylamino mit jeweils 1 bis 10 C-Atomen im Alkylrest und 6 bis 20 C-Atomen im Arylrest, |
| r | eine ganze Zahl von 1 bis 4 und |
| s, t und u | ganze Zahlen von 0 bis 3 bedeuten, wobei die Summe r+s+t+u der Wertigkeit von $M^1$ entspricht, |

B) Umsetzung des nach A) erhaltenen Materials mit einem verbrückten Metallocenkomplex in seiner Metalldihalogenid-Form und einer metalloceniumionenhildenden Verbindung und

C) anschließende Umsetzung mit einer Metallverbindung der allgemeinen Formel II

$$M^2(R^5)_o(R^6)_p(R^7)_q \qquad \text{II}$$

in der

| | |
|---|---|
| $M^2$ | ein Alkali-, ein Erdalkalimetall, Zink oder ein Metall der III. Hauptgruppe des Periodensystems bedeutet, |
| $R^5$ | Wasserstoff, $C_1$- bis $C_{10}$-Alkyl, $C_6$- bis $C_{15}$-Aryl, Alkylaryl oder Arylalkyl mit jeweils 1 bis 10 C-Atomen im Alkylrest und 6 bis 20 C-Atomen im Arylrest, |
| $R^6$ und $R^7$ | Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest, |
| o | eine ganze Zahl von 1 bis 3 |

und

p und q ganze Zahlen von 0 bis 2 bedeuten, wobei die Summe o+p+q der Wertigkeit von $M^2$ entspricht.

9. Verfahren zur Herstellung von Ethylencopolymeren nach Anspruch 8, dadurch gekennzeichnet, daß die Polymerisation in der Gasphase vorgenommen wird.

10. Verfahren zur Herstellung von Ethylencopolymeren nach Anspruch 8, dadurch gekennzeichnet, daß die Polymerisation in Suspension vorgenommen wird.

11. Verwendung von Copolymeren gemäß den Ansprüchen 1 bis 7 zur Herstellung von Folien, Hohlkörpern und Fasern.

12. Folien, Hohlkörper und Fasern hergestellt unter Verwendung von Copolymeren gemäß den Ansprüchen 1 bis 7.

Europäisches Patentamt

# EUROPÄISCHER RECHERCHENBERICHT

Nummer der Anmeldung
EP 99 10 4858

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| X | EP 0 743 324 A (UNION CARBIDE CHEM PLASTIC) 20. November 1996<br>* Seite 2, Zeile 55 - Seite 3, Zeile 8 *<br>* Seite 7, Zeile 3 - Seite 9, Zeile 27; Ansprüche; Beispiele *<br>--- | 1-12 | C08F210/16 |
| X | WO 94 26816 A (EXXON CHEMICAL PATENTS INC) 24. November 1994<br>* Seite 4, Zeile 12 - Seite 7, Zeile 19 *<br>* Seite 9, Zeile 22 - Zeile 29; Ansprüche *<br>* Seite 7, Zeile 20 - Seite 8, Zeile 36 *<br>--- | 1-12 | |
| A | WO 95 04761 A (EXXON CHEMICAL PATENTS INC) 16. Februar 1995<br>* Zusammenfassung *<br>--- | 1-12 | |
| D,X | WO 87 03889 A (MITSUI PETROCHEMICAL IND) 2. Juli 1987<br>comparative example 4<br>* Ansprüche *<br>--- | 1-12 | RECHERCHIERTE SACHGEBIETE (Int.Cl.6) |
| D,A | DE 196 06 167 A (BASF AG) 21. August 1997<br>* das ganze Dokument *<br>----- | 8-12 | C08F |

Der vorliegende Recherchenbericht wurde für alle Patentansprüche erstellt

| Recherchenort | Abschlußdatum der Recherche | Prüfer |
|---|---|---|
| DEN HAAG | 30. Juni 1999 | Kaumann, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 10 4858

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-06-1999

| Im Recherchenbericht angeführtes Patentdokument | Datum der Veröffentlichung | Mitglied(er) der Patentfamilie | Datum der Veröffentlichung |
|---|---|---|---|
| EP 0743324 A | 20-11-1996 | AU 5228496 A | 28-11-1996 |
| | | BR 9602268 A | 07-04-1998 |
| | | CA 2176623 A | 17-11-1996 |
| | | JP 8311121 A | 26-11-1996 |
| | | US 5852143 A | 22-12-1998 |
| WO 9426816 A | 24-11-1994 | AU 698910 B | 12-11-1998 |
| | | AU 6911294 A | 12-12-1994 |
| | | CA 2162681 A | 24-11-1994 |
| | | CN 1126483 A | 10-07-1996 |
| | | CN 1126481 A | 10-07-1996 |
| | | DE 69415317 D | 28-01-1999 |
| | | DE 69415317 T | 02-06-1999 |
| | | EP 0699219 A | 06-03-1996 |
| | | EP 0698044 A | 28-02-1996 |
| | | EP 0877051 A | 11-11-1998 |
| | | ES 2125458 T | 01-03-1999 |
| | | JP 8510290 T | 29-10-1996 |
| | | JP 8510291 T | 29-10-1996 |
| | | WO 9426793 A | 24-11-1994 |
| WO 9504761 A | 16-02-1995 | AU 7521794 A | 28-02-1995 |
| | | CA 2168883 A | 16-02-1995 |
| | | CN 1131953 A | 25-09-1996 |
| | | EP 0719287 A | 03-07-1996 |
| | | JP 9501707 T | 18-02-1997 |
| | | US 5470811 A | 28-11-1995 |
| | | US 5536796 A | 16-07-1996 |
| WO 8703889 A | 02-07-1987 | CA 1291472 A | 29-10-1991 |
| | | CA 1278646 A | 02-01-1991 |
| | | EP 0250600 A | 07-01-1988 |
| | | JP 2043820 C | 09-04-1996 |
| | | JP 7080948 B | 30-08-1995 |
| | | JP 63022804 A | 30-01-1988 |
| | | AT 60925 T | 15-03-1991 |
| | | US 5641843 A | 24-06-1997 |
| DE 19606167 A | 21-08-1997 | AU 1791997 A | 10-09-1997 |
| | | CA 2246360 A | 28-08-1997 |
| | | CN 1211996 A | 24-03-1999 |
| | | WO 9731038 A | 28-08-1997 |
| | | EP 0882076 A | 09-12-1998 |
| | | NO 983785 A | 19-10-1998 |

EPO FORM P0461

Für nähere Einzelheiten zu diesem Anhang : siehe Amtsblatt des Europäischen Patentamts, Nr.12/82